# EUROPEAN PATENT SPECIFICATION

(11) **EP 4 235 070 B1**
(45) Date of publication and mention of the grant of the patent: **01.10.2025**
(21) Application number: 23184724.5
(22) Date of filing: 15.10.2021
(51) Int. Cl.: F26B 17/12, F26B 3/06, B29B 13/06, F26B 21/08, F26B 25/00

(54) **PLANT FOR DRYING GRANULAR POLYMER MATERIAL**
ANLAGE ZUM TROCKNEN VON KÖRNIGEM POLYMERMATERIAL
INSTALLATION DE SÉCHAGE DE MATÉRIAU POLYMÈRE GRANULAIRE

(30) Priority: 16.10.2020 IT 202000024507
(43) Date of publication of application: 30.08.2023
(62) Divisional of application: 21802808.2
(73) Proprietor: Pegaso Industries S.p.A., 35010 Borgoricco (PD) (IT)
(72) Inventor: PIVA, Rinaldo, 35010 Borgoricco (PD) (IT)
(74) Representative: Susanetto, Carlo

(56) References cited:
- EP-A1- 3 798 560
- EP-A2- 1 316 770
- CN-A- 109 269 271
- CN-A- 110 579 098
- DE-A1- 19 639 819
- DE-A1- 19 757 537
- JP-B2- 3 811 410
- US-A- 4 974 336
- US-A1- 2019 105 806

## Description

### Technical field

The present invention relates to a plant for drying granular polymer material.

### Technological background

The invention is particularly used in industrial processes for converting plastics material into granules by means of extrusion or moulding.

It is known that such operations require, in order to ensure an adequate level of quality of the moulded product, that the plastics material which is introduced into the moulds have as much humidity removed as possible.

However, this requirement is not very compatible with the high levels of hygroscopic properties of some plastics materials which are increasingly used in the field, such as, for example, those based on recycled polyethylene terephthalate (rPET).

Therefore, these plastics materials, before being subjected to the extrusion or moulding process, have to be advantageously processed in suitable drying plants where the content of water of the granules is reduced to the minimal quantities required by the conversion process.

In a commonly used process, the drying of the granular polymer material is carried out inside a hopper, in which the material to be dried is placed and in which there is introduced a continuous flow of a process gas which is hot and dry and which, by coming into contact with the granular material, provides for stripping the water present in the granules.

The process gas, which is typically air, before being introduced into the hopper in order to come into contact with the granular material to be dried, is dehumidified in a suitable dehumidification unit and is subsequently heated to the desired temperature.

In a known example of a drying plant, the process gas being discharged from the hopper is placed back into circulation in order to be dehumidified, heated and reintroduced into the hopper again.

A main disadvantage of this prior art is that the resin loaded in the hopper and the process gas which is blown in through the resin contain some contaminating substances, such as, for example, residues of benzene and relevant derivatives, acetaldehyde (AA) and possible residual oils resulting from the recovery cycle of the recycled PET.

It is evident that these contaminating substances present in the plastics material which is introduced into the moulds irreparably compromise the quality level of the moulded product.

The market requires increasing quantities of rPET and the quality of the rPET tends to be worse and worse, therefore, the search for solutions which allow a reduction in the chemical impurities in the plastics material constitutes a requirement which is particularly felt in the technical field in question.

Examples of polymer dryers according to the prior art are disclosed by DE19757537A1, CN110579098A, or EP1316770A2.

### Disclosure of the invention

The problem addressed by the present invention is to provide a drying plant which is structurally and functionally configured to at least partially overcome one or more of the disadvantages set out above with reference to the cited prior art.

In particular, an object of the present invention is to provide a drying plant which reduces the chemical impurities of the plastics materials with respect to a conventional drying plant as described above with reference to the prior art.

An object of the present invention is also to provide a drying plant which reduces the overall emission of polluting substances with respect to a conventional drying plant as described above with reference to the prior art. Furthermore, an object of the present invention is to provide a drying plant which has a greater level of energy efficiency with respect to a conventional drying plant as described above with reference to the prior art.

Another object of the invention is to provide a drying plant which is simple to construct and carry out.

The problem and the objects indicated above are solved and overcome by the present invention by means of a drying plant comprising one or more of the features of the appended claims.

The invention is directed towards a plant for drying granular polymer material, comprising a hopper, in which the granular polymer material is dried, and a process gas circuit, which is configured to supply a process gas to the hopper in order to dry the granular polymer material.

The process gas circuit comprises a dehumidification and heating unit which is configured to dehumidify and heat the process gas to predefined humidity and temperature values for supply to the hopper, respectively.

The process gas circuit further comprises a purification group which is positioned at the outlet from the hopper and upstream of the dehumidification and heating unit and which is configured to purify the process gas from contaminating substances which are released by the granular polymer material in the hopper.

The purification group comprises a condenser which is configured to cool the process gas to a predefined condensation temperature of the contaminating substances so as to separate from the process gas the contaminating substances condensed in this manner.

The purification group further comprises a filter which is positioned at the outlet from the condenser and which contains activated carbon capable of absorbing any non-condensed contaminating substances.

In this manner, the purification group returns to the dehumidification and heating unit the process gas which is purified from the impurities which it accumulates during the passage of the hopper.

It will be appreciated that the plant for drying granular polymer material constructed according to the present invention is particularly suitable for drying granular polymer material which contains rPET. In fact, the purification group for the process gas is particularly effective for reducing the chemical impurities such as benzene and relevant derivatives, acetaldehyde (AA) and possible residual oils resulting from the recovery cycle of the recycled PET.

In an aspect, the condenser is configured to cool the process gas to a temperature between 10°C and 30°C, preferably to a temperature between 15°C and 25°C, even more preferably to a temperature of substantially 20°C. It will be appreciated that these temperature ranges advantageously correspond to the condensation point of benzene and/or acetaldehyde.

According to another advantageous aspect, the contaminating substances which are thereby condensed are conveyed through a discharge pipe towards a collection tank for the disposal thereof.

The purification group comprises a first pipe for the process gas which is being discharged from the hopper and upstream of the condenser, and a second pipe for the process gas which is being discharged from the filter and upstream of the dehumidification and heating unit.

In this context, the purification group further comprises a heat exchanger which includes the first pipe and the second pipe. The heat exchanger is configured to exchange heat between the process gas being introduced into the purification group through the first pipe and the process gas being discharged from the purification group through the second pipe.

As a result of this provision, the drying plant allows a better energy performance to be achieved.

In fact, the first branch discharges heat to the second branch so as to cool the process gas before it reaches the condenser. In this manner, the energy supply required for the condenser in order to reduce the temperature of the process gas to the predefined condensation temperature of the contaminating substances is reduced.

In an aspect, the heat exchanger is further configured to cooperate with the condenser so as to cool the process gas to a suitable temperature for the dehumidification step.

The Applicant has assessed, in an indicative manner, the efficiency of the purification group when the process gas being introduced into the purification group has the following characteristics: temperature of approximately 80°C, humidity of approximately 1000 parts per million (ppm), approximately 65 parts per billion (ppb) of benzene and approximately 1.2 ppm of acetaldehyde. In this case, the drying plant which is constructed according to the present invention achieves a purification of the process gas so as to obtain a process gas being discharged from the purification group with the following characteristics: temperature of approximately 60°C, humidity of approximately 1100 ppm, benzene less than 10 ppb and acetaldehyde less than 0.4 ppm.

In addition to the evident reduction of the contaminating substances, it must be observed that the process gas, during the passage through the purification group, is subjected to a decrease in temperature which can be quantified at approximately 20°C, which has a positive influence on the subsequent dehumidification step.

In an aspect, the process gas circuit comprises a movement unit which is configured to move the process gas along the process gas circuit, more specifically between the dehumidification and heating unit, the hopper and the purification group, and furthermore preferably in the purification group between the heat exchanger, the condenser and the filter.

In another preferred embodiment, the process gas circuit further comprises a cyclone separator which is positioned at the outlet from the hopper and upstream of the purification group. The cyclone separator is preferably configured to separate the dust of the polymer material granules from the flow of process gas being introduced into the purification group.

By separating the dust from the process gas being introduced into the purification group, the cyclone prevents the dust from being able to obstruct the filter, inhibiting the action of the activated carbon. Therefore, the presence of the cyclone considerably extends the service-life of the filter and increases the absorption in the filter of the non-condensed contaminating substances.

The presence of the cyclone further prevents the dust - being introduced into the condenser - from being able to become combined with the condensate, obstructing not only the filter but also the pipes themselves of the purification group. Therefore, the presence of the cyclone allows the entire purification group to be maintained at the correct functional efficiency. In the absence of the cyclone, furthermore, some of the dust could pass through the filter and could accumulate in the dehumidification and heating unit which is connected downstream. Therefore, the presence of the cyclone upstream also prevents this possible disadvantage.

In some embodiments, the movement unit (for example, an impeller fan) is connected downstream of the cyclone with respect to the direction of flow of process gas. In this manner, the impeller of the fan or other components of the movement unit which are exposed to the flow of gas and which are therefore liable to become damaged in the presence of dust is/are also protected as a result of the action of the cyclone.

In a preferred embodiment, the process gas circuit is a closed circuit with an inlet pipe into the hopper located downstream of the dehumidification and heating unit, an outlet pipe from the hopper located upstream of the purification group, and an inlet pipe into the dehumidification and heating unit located downstream of the purification group.

In particular, along the circuit from the outlet of the hopper, there are the cyclone separator, then the heat exchanger, subsequently the condenser, followed by the filter and then again the heat exchanger, and then the dehumidification and heating unit.

### Brief description of the drawings

The features and advantages of the invention will be better appreciated from the detailed description of a preferred embodiment thereof, which is illustrated by way of non-limiting example with reference to the appended drawings, in which:

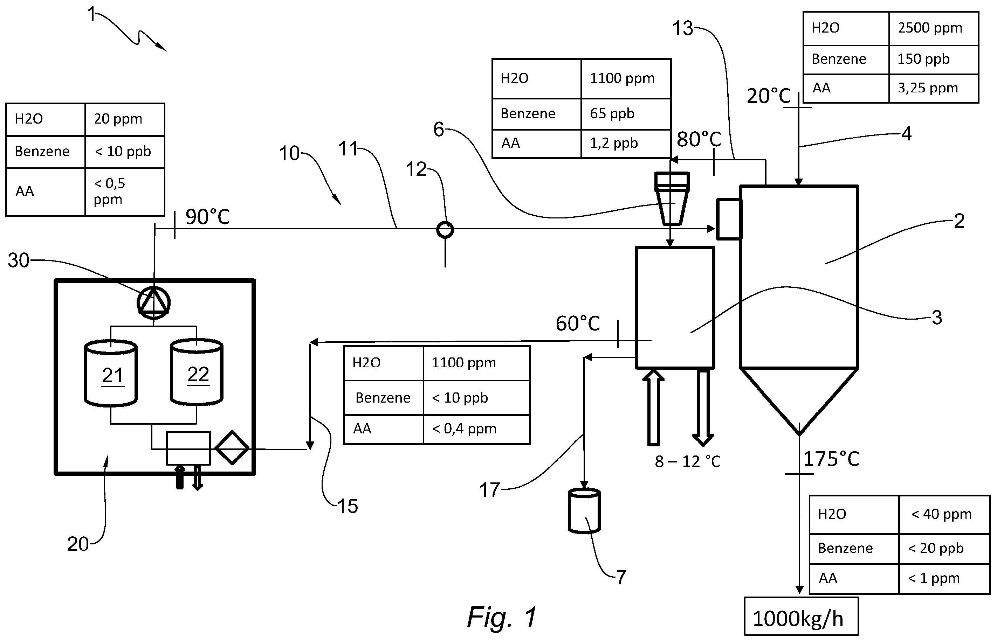

- Figure 1 is a schematic view of a plant for drying granular polymer material which is constructed according to the present invention,
- Figure 2 is a schematic view of a detail of the plant of Figure 1.

### Preferred embodiment of the invention

In the Figures, there is generally designated 1 a plant for drying granular polymer material which is constructed according to the present invention. The plant 1 is provided to dry any polymer material in granules, for example, polyamide, polycarbonate or ABS copolymer even if, in the preferred example described herein, the material processed is formed at a ratio of approximately 50% by granules of recycled polyethylene terephthalate (rPET).

The plant 1 can be provided to supply a machine for converting the granular polymer material (not shown), such as, for example, a press or an extruder. The plant 1 comprises a loading line 4 which is provided to load the granular polymer material to be dried in the hopper 2.

The plant 1 further comprises a process gas circuit 10 which is associated with the hopper 2 in order to introduce therein a hot and dry process gas which, by passing through the granular material contained in the hopper 2, is capable of reducing the degree of humidity thereof to the levels desired and suitable for the subsequent processing steps.

The process gas may be air or an inert gas without oxygen.

In the example described herein, there is provided a single drying hopper but there may also be provided two or more hoppers which are arranged in series or parallel.

The process gas circuit 10 includes a dehumidification and heating unit 20 comprising a heating device which is provided to heat the process gas to the predefined temperature for introduction into the hopper 2. In the example described herein, in which the granular polymer material is a mixture containing 50% of rPET, the process gas is heated to approximately 90°.

In some embodiments, the dehumidification and heating unit 20 further comprises a pair of towers 21 and 22 which are mutually identical and which each contain a suitable quantity of drying compound, for example, zeolites.

Preferably, each tower 21, 22 has dimensions so as to dehumidify the process gas to a predefined humidity level, for example, corresponding to 20 parts per million (ppm) of water.

The towers 21 and 22 are connected to each other in parallel and are selectively and alternately able to be connected to the process gas circuit 10. According to another aspect, the process gas circuit 10 further comprises a movement unit 30, preferably comprising one or more blowers, in order to move the process gas along the process gas circuit 10.

Downstream of the dehumidification and heating unit 20, there is provided an inlet pipe 11, by means of which the process gas is introduced into the hopper 2. Along the inlet pipe 11 there can be provided a sampling location 12 for sampling the process gas. It is thereby possible to monitor, for example, the concentration of residual contaminating substances in the process gas. At the end of the inlet pipe 11, there is preferably mounted a diffuser (not shown) which is introduced into the granular polymer material contained in the hopper 2. After passing through the granular polymer material contained in the hopper 2, the process gas is discharged from the hopper through an outlet pipe 13. Preferably, the outlet pipe 13 leads to a cyclone separator 6.

The cyclone separator 6 is configured to separate the process gas from any dust which is carried from the interior of the hopper 2.

Downstream of the cyclone separator 6, if present, and upstream of the dehumidification and heating unit 20, the process gas circuit 10 comprises a purification group 3 which is configured to purify the process gas from contaminating substances which are released by the granular polymer material in the hopper.

The purification group 3 is connected to the dehumidification and heating unit 20 with a pipe 15 so as to bring the process gas back into circulation.

In some embodiments, there is provided a bypass valve of the process gas which allows the purification group 3 to be excluded from the process gas circuit 10. In this manner, any maintenance operations for the purification group 3 do not require the operation of the entire plant to be necessarily stopped. Furthermore, the bypass valve allows the purification group 3 to be excluded when the characteristics of the material in the hopper and the process parameters should be such as not to require the removal of contaminating substances from the process gas.

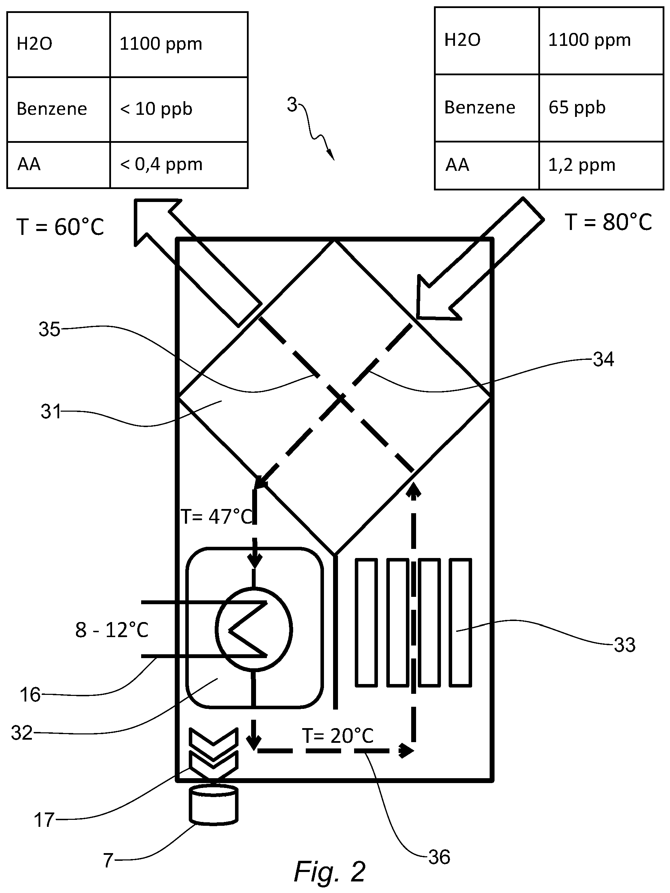

As set out in Figure 2, the purification group 3 comprises a heat exchanger 31, a condenser 32 and a filter 33 which are connected to each other.

In particular, the heat exchanger 31 includes a first pipe 34 for the process gas being discharged from the hopper 2 and upstream of the condenser 32, and a second pipe 35 for the process gas being discharged from the filter 33 and upstream of the dehumidification and heating unit 20. The purification unit 3 further comprises a third pipe 36 at the outlet from the condenser 32 and upstream of the filter 33.

The heat exchanger 31 is configured to exchange heat between the process gas being introduced into the purification group 3 through the first pipe 34 and the process gas being discharged from the purification group 3 through the second pipe 35.

The condenser 32 which receives the process gas from the exchanger 31 through the first pipe 34 is, for example, connected to a cooling water line 16 and is provided to cool the process gas to a predefined condensation temperature of the contaminating substances which are released from the granular polymer material in the hopper. For example, in order to condense benzene and acetaldehyde, the cooling water line 16 transports water at approximately from 8 to 12°C and the condenser 32 cools the process gas to approximately 20°C.

At the outlet from the condenser 32, there is provided a discharge pipe 17 which is configured to discharge the condensed contaminating substances towards a collection tank 7 for the subsequent disposal thereof.

The filter 33 which receives the process gas from the condenser 32 through the third pipe 36 contains activated carbon which is capable of absorbing any contaminating substances which are still present in the process gas because they were not condensed in the condenser 32. In a greatly preferred embodiment, the filter 33 comprises a plurality of filtering elements, which are preferably cylindrical and which contain activated carbon. It will be appreciated that the presence of a plurality of filtering elements reduces the costs of maintenance of the filter 33 because each element can be replaced independently of the others. The cylindrical formation, instead, serves to reduce the resistance to advance of the process gas flow through the filtering elements.

The plant 1 operates in the modes described below.

The granular polymer material, in this example a mixture at least partially formed by rPET, is loaded by means of the loading line 4 in the hopper 2, where it is dried by means of contact with the process gas which is introduced into the hopper 2 through the process gas circuit 10.

The process gas is moved along the process gas circuit 10 as a result of the action of the blowers of the movement unit 30.

In the dehumidification and heating unit 20, the process gas is heated by means of a heating device until reaching a temperature suitable for supply to the hopper, such as, for example, a temperature of 90°C, and is dehumidified by means of one of the towers 21, 22 until reaching a suitable level of residual humidity, such as, for example, 20 ppm of water.

The process gas is then introduced into the hopper 2 through the inlet pipe 11 and the diffuser and then brought back into the circuit 10 by means of the outlet pipe 13.

The output temperature of the process gas is approximately 80°C and, after passing through the cyclone separator 6 which retains the dust so as to prevent obstructions, the process gas can be supplied to the purification group 3.

The process gas is introduced into the purification group 3 through the first pipe 35 and, by means of the heat exchanger 31, the gas discharges heat, lowering its own temperature, for example, to approximately from 45 to 50°C.

At this point, the process gas passes through the condenser 32 and is subjected to an additional cooling as far as a suitable temperature for condensing the contaminating substances, for example, approximately 20°C for condensing benzene and acetaldehyde.

The contaminating substances which are condensed in this manner are separated from the process gas and conveyed towards the tank 7 through the discharge pipe 17.

The process gas being discharged from the condenser 32 reaches the filter 33 through the third pipe 36.

In the filter 33, the process gas passes through filtering elements which contain activated carbon which absorbs any contaminating substances which are not condensed in the preceding passage through the condenser 32.

Afterwards, the process gas again passes through the heat exchanger 31. In this case, however, the process gas passes through the second pipe 35 and, being at a temperature lower than the process gas of the first pipe 34, takes on heat from the latter until reaching a temperature suitable for the subsequent dehumidification step, for example, a temperature of approximately 60°C.

At this point, the process gas returns to the dehumidification and heating unit 20 through the pipe 15.

In the embodiment illustrated, the process gas being introduced into the purification group 10 has the following characteristics: temperature of approximately 80°C; humidity of approximately 1000 parts per million (ppm); approximately 65 parts per billion (ppb) of benzene; and approximately 1.2 ppm of acetaldehyde. In the same embodiment, the process gas being discharged from the purification group 10 has the following characteristics: temperature of approximately 60°C; humidity of approximately 1100 ppm; benzene less than 10 ppb; and acetaldehyde less than 0.4 ppm.

Still with reference to the embodiment illustrated, the plastics material being introduced into the hopper 2 has the following characteristics: temperature of approximately 20°C; humidity of approximately 2500 ppm; approximately 150 ppb of benzene; and approximately 3.25 ppm of acetaldehyde. The plastics material being discharged from the hopper 2 has the following characteristics: temperature of approximately 175°C; humidity less than 40 ppm; benzene less than 20 ppb; and acetaldehyde less than 1 ppm.

The drying plant 1 carries out the optimum drying of the granular polymer material contained in the hopper 2, achieving a relevant reduction of the content of contaminating substances in the material itself and in the process gas used for drying the material.

The invention thereby solves the problem set out, further obtaining plastics material with a high level of quality based on recycled PET.

## Claims

1. A plant (1) for drying granular polymer material, comprising a hopper (2), in which granular polymer material is dried, and a process gas circuit (10), which is configured to supply a process gas to the hopper (2) in order to dry the granular polymer material, wherein the process gas circuit (10) comprises:
- a dehumidification and heating unit (20) which is configured to dehumidify and heat the process gas to predefined humidity and temperature values for supply to the hopper (2), respectively, and
- a purification group (3) which is positioned at the outlet from the hopper (2) and upstream of the dehumidification and heating unit (20) and which is configured to purify the process gas from contaminating substances which are released by the granular polymer material in the hopper (2),
wherein the purification group (3) comprises:
- a condenser (32) which is configured to cool the process gas to a predefined condensation temperature of the contaminating substances so as to separate from the process gas the contaminating substances condensed in this manner,
- a filter (33) which is positioned at the outlet from the condenser (32) and which contains activated carbon capable of absorbing non-condensed contaminating substances,
- a first pipe (34) for the process gas which is being discharged from the hopper (2) and upstream of the condenser (32),
- a second pipe (35) for the process gas which is being discharged from the filter (33) and upstream of the dehumidification and heating unit (20), and
- a heat exchanger (31) which includes the first pipe (34) and second pipe (35), the heat exchanger (31) being configured to exchange heat between the process gas being introduced into the purification group (3) through the first pipe (34) and the process gas being discharged from the purification group (3) through the second pipe (35).

2. A plant (1) according to claim 1, wherein the condenser (32) is configured to cool the process gas to a temperature between 10°C and 30°C.

3. A plant (1) according to claim 1, wherein the condenser (32) is configured to cool the process gas to a temperature between 15°C and 25°C.

4. A plant (1) according to claim 1, wherein the condenser (32) is configured to cool the process gas to a temperature of substantially 20°C.

5. A plant (1) according to any one of the preceding claims, wherein the process gas circuit (10) comprises a cyclone separator (6) which is positioned at the outlet from the hopper (2) and upstream of the purification group (3), and which is configured to separate a dust of the polymer material granules from the process gas being introduced into the purification group.

6. A plant (1) according to any one of the preceding claims, wherein the process gas circuit (10) comprises a movement unit (30) which is configured to move the process gas along the process gas circuit (10) between the dehumidification and heating unit (20), the hopper (2) and the purification group (3), and furthermore in the purification group (3) between the heat exchanger (31), the condenser (32) and the filter (33).

7. A plant (1) according to any one of the preceding claims, wherein the process gas circuit (10) is a closed circuit.

8. A plant (1) according to any one of the preceding claims, wherein downstream of the dehumidification and heating unit (20) there is provided an inlet pipe (11), by means of which the process gas is introduced into the hopper (2), along the inlet pipe (11) there being provided a sampling location (12) for sampling the process gas.

9. A plant (1) according to any one of the preceding claims, wherein downstream of the dehumidification and heating unit (20) there is provided an inlet pipe (11), by means of which the process gas is introduced into the hopper (2), at the end of the inlet pipe (11) there being mounted a diffuser which is introduced into the granular polymer material contained in the hopper (2).

10. A plant (1) according to any one of the preceding claims, wherein there is provided a bypass valve of the process gas which allows the purification group (3) to be excluded from the process gas circuit (10).

11. A plant (1) according to any one of the preceding claims, wherein the filter (33) comprises a plurality of filtering elements which contain activated carbon.

12. A plant (1) according to claim 11, wherein the filtering elements are cylindrical.

13. A plant (1) according to any one of the preceding claims, wherein the condenser (32) is connected to a cooling water line (16).

14. A plant (1) according to any one of the preceding claims, wherein the process gas circuit (10) comprises a movement unit (30), comprising one or more blowers, in order to move the process gas along the process gas circuit (10).

## Patentansprüche

1. Anlage (1) zum Trocknen von körnigem Polymermaterial mit einem Trichter (2), in dem körniges Polymermaterial getrocknet wird, und einem Prozessgaskreislauf (10), der eingerichtet ist, um dem Trichter (2) ein Prozessgas zuzuführen, um das körnige Polymermaterial zu trocknen, wobei der Prozessgaskreislauf (10) aufweist:
- eine Entfeuchtungs- und Heizeinheit (20), die eingerichtet ist, um das Prozessgas zu entfeuchten bzw. auf vorgegebene Feuchtigkeits- und Temperaturwerte zu erwärmen, um es dem Trichter (2) zuzuführen, und
- eine Reinigungsgruppe (3), die am Auslass des Trichters (2) und stromaufwärts der Entfeuchtungs- und Heizeinheit (20) positioniert ist, und die eingerichtet ist, um das Prozessgas von Verunreinigungen zu reinigen, die durch das körnige Polymermaterial im Trichter (2) freigesetzt werden, wobei die Reinigungsgruppe (3) aufweist:
- einen Kondensator (32), der eingerichtet ist, um das Prozessgas auf eine vorgegebene Kondensationstemperatur der Verunreinigungen zu kühlen, um die auf diese Weise kondensierten Verunreinigungen vom Prozessgas zu trennen,
- einen Filter (33), der am Ausgang des Kondensators (32) positioniert ist und Aktivkohle enthält, die in der Lage ist, um nicht kondensierte Verunreinigungen zu absorbieren,
- ein erstes Rohr (34) für das Prozessgas, das aus dem Trichter (2) und stromaufwärts des Kondensators (32) abgeleitet wird,
- ein zweites Rohr (35) für das Prozessgas, das aus dem Filter (33) und stromaufwärts der Entfeuchtungs- und Heizeinheit (20) abgeleitet wird, und
- einen Wärmetauscher (31), der das erste Rohr (34) und das zweite Rohr (35) umfasst, wobei der Wärmetauscher (31) eingerichtet ist, um Wärme zwischen dem Prozessgas, das durch das erste Rohr (34) in die Reinigungsgruppe (3) eingeleitet wird, und dem Prozessgas, das durch das zweite Rohr (35) aus der Reinigungsgruppe (3) abgeleitet wird, auszutauschen.

2. Anlage (1) nach Anspruch 1, wobei der Kondensator (32) eingerichtet ist, um das Prozessgas auf eine Temperatur zwischen 10 °C und 30 °C zu kühlen.

3. Anlage (1) nach Anspruch 1, wobei der Kondensator (32) eingerichtet ist, um das Prozessgas auf eine Temperatur zwischen 15 °C und 25 °C zu kühlen.

4. Anlage (1) nach Anspruch 1, wobei der Kondensator (32) eingerichtet ist, um das Prozessgas auf eine Temperatur von im Wesentlichen 20 °C zu kühlen.

5. Anlage (1) nach einem der vorhergehenden Ansprüche, wobei der Prozessgaskreislauf (10) einen Zyklonabscheider (6) aufweist, der am Auslass des Trichters (2) und stromaufwärts der Reinigungsgruppe (3) positioniert ist, und der eingerichtet ist, um Staub der Polymermaterialgranulate vom in die Reinigungsgruppe eingeleiteten Prozessgas zu trennen.

6. Anlage (1) nach einem der vorhergehenden Ansprüche, wobei der Prozessgaskreislauf (10) eine Bewegungseinheit (30) aufweist, die eingerichtet ist, um das Prozessgas entlang des Prozessgaskreislaufs (10) zwischen der Entfeuchtungs-und Heizeinheit (20), dem Trichter (2) und der Reinigungsgruppe (3) sowie außerdem in der Reinigungsgruppe (3) zwischen dem Wärmetauscher (31), dem Kondensator (32) und dem Filter (33) zu bewegen.

7. Anlage (1) nach einem der vorhergehenden Ansprüche, wobei der Prozessgaskreislauf (10) ein geschlossener Kreislauf ist.

8. Anlage (1) nach einem der vorhergehenden Ansprüche, wobei ein Einlassrohr (11) stromabwärts der Entfeuchtungs- und Heizeinheit (20) vorgesehen ist, durch das das Prozessgas in den Trichter (2) eingeleitet wird, wobei entlang des Einlassrohrs (11) eine Entnahmestelle (12) zur Entnahme der Prozessgasprobe vorgesehen ist.

9. Anlage (1) nach einem der vorhergehenden Ansprüche, wobei ein Einlassrohr (11) stromabwärts der Entfeuchtungs- und Heizeinheit (20) vorgesehen ist, durch das das Prozessgas in den Trichter (2) eingeleitet wird, wobei am Ende des Einlassrohrs (11) ein Diffusor montiert ist, der in das im Trichter (2) enthaltene körnige Polymermaterial eingeführt wird.

10. Anlage (1) nach einem der vorhergehenden Ansprüche, wobei ein Bypassventil für das Prozessgas vorgesehen ist, das den Ausschluss der Reinigungsgruppe (3) aus dem Prozessgaskreislauf (10) ermöglicht.

11. Anlage (1) nach einem der vorhergehenden Ansprüche, wobei der Filter (33) eine Mehrzahl von Filterelementen aufweist, die Aktivkohle enthalten.

12. Anlage (1) nach Anspruch 11, wobei die Filterelemente zylindrisch sind.

13. Anlage (1) nach einem der vorhergehenden Ansprüche, wobei der Kondensator (32) mit einer Kühlwasserleitung (16) verbunden ist.

14. Anlage (1) nach einem der vorhergehenden Ansprüche, wobei der Prozessgaskreislauf (10) eine Bewegungseinheit (30) mit einem oder mehreren Gebläsen aufweist, um das Prozessgas entlang des Prozessgaskreislaufs (10) zu bewegen.

## Revendications

1. Installation (1) pour le séchage d'un matériau polymère granulaire, comprenant une trémie (2), dans laquelle le matériau polymère granulaire est séché, et un circuit de gaz de traitement (10), qui est configuré pour fournir un gaz de traitement à la trémie (2) afin de sécher le matériau polymère granulaire, dans lequel le circuit de gaz de traitement (10) comprend :
- une unité de déshumidification et de chauffage (20) configurée pour déshumidifier et chauffer le gaz de traitement à des valeurs d'humidité et de température prédéfinies pour l'alimentation de la trémie (2), respectivement, et
- un groupe de purification (3) placé à la sortie de la trémie (2) et en amont de l'unité de déshumidification et de chauffage (20) et configuré pour purifier le gaz de traitement des substances contaminantes libérées par le matériau polymère granulaire dans la trémie (2),
dans lequel le groupe de purification (3) comprend :
- un condenseur (32) configuré pour refroidir le gaz de traitement à une température de condensation prédéfinie des substances contaminantes afin de séparer du gaz de traitement les substances contaminantes ainsi condensées,
- un filtre (33) placé à la sortie du condenseur (32) et contenant du charbon actif capable d'absorber les substances contaminantes non condensées,
- un premier tuyau (34) pour le gaz de traitement qui est déchargé de la trémie (2) et en amont du condenseur (32),
- un second tuyau (35) pour le gaz de traitement qui est déchargé du filtre (33) et en amont de l'unité de déshumidification et de chauffage (20), et
- un échangeur de chaleur (31) qui inclut le premier tuyau (34) et le second tuyau (35), l'échangeur de chaleur (31) étant configuré pour échanger de la chaleur entre le gaz de traitement introduit dans le groupe de purification (3) par le premier tuyau (34) et le gaz de traitement déchargé du groupe de purification (3) par le second tuyau (35).

2. Installation (1) selon la revendication 1, dans laquelle le condenseur (32) est configuré pour refroidir le gaz de traitement à une température comprise entre 10 °C et 30 °C.

3. Installation (1) selon la revendication 1, dans laquelle le condenseur (32) est configuré pour refroidir le gaz de traitement à une température comprise entre 15 °C et 25 °C.

4. Installation (1) selon la revendication 1, dans laquelle le condenseur (32) est configuré pour refroidir le gaz de traitement à une température de 20 °C environ.

5. Installation (1) selon l'une quelconque des revendications précédentes, dans laquelle le circuit de gaz de traitement (10) comprend un séparateur cyclonique (6) placé à la sortie de la trémie (2) et en amont du groupe de purification (3), et qui est configuré pour séparer une poussière de granulés de matériau polymère du gaz de traitement introduit dans le groupe de purification.

6. Installation (1) selon l'une quelconque des revendications précédentes, dans laquelle le circuit de gaz de traitement (10) comprend une unité de déplacement (30) configurée pour déplacer le gaz de traitement le long du circuit de gaz de traitement (10) entre l'unité de déshumidification et de chauffage (20), la trémie (2) et le groupe de purification (3), et en outre dans le groupe de purification (3) entre l'échangeur de chaleur (31), le condenseur (32) et le filtre (33).

7. Installation (1) selon l'une quelconque des revendications précédentes, dans laquelle le circuit de gaz de traitement (10) est un circuit fermé.

8. Installation (1) selon l'une quelconque des revendications précédentes, dans laquelle, en aval de l'unité de déshumidification et de chauffage (20), il est prévu un tuyau d'entrée (11) par lequel le gaz de traitement est introduit dans la trémie (2), le long du tuyau d'entrée (11) étant prévu un emplacement d'échantillonnage (12) pour l'échantillonnage du gaz de traitement.

9. Installation (1) selon l'une quelconque des revendications précédentes, dans laquelle, en aval de l'unité de déshumidification et de chauffage (20), il est prévu un tuyau d'entrée (11), au moyen duquel le gaz de traitement est introduit dans la trémie (2), à l'extrémité du tuyau d'entrée (11) est monté un diffuseur qui est introduit dans le matériau polymère granulaire contenu dans la trémie (2).

10. Installation (1) selon l'une quelconque des revendications précédentes, dans laquelle il est prévu une vanne de dérivation du gaz de traitement qui permet d'exclure le groupe de purification (3) du circuit de gaz de traitement (10).

11. Installation (1) selon l'une quelconque des revendications précédentes, dans laquelle le filtre (33) comprend plusieurs éléments filtrants contenant du charbon actif.

12. Installation (1) selon la revendication 11, dans laquelle les éléments filtrants sont cylindriques.

13. Installation (1) selon l'une quelconque des revendications précédentes, dans laquelle le condenseur (32) est relié à une conduite d'eau de refroidissement (16).

14. Installation (1) selon l'une quelconque des revendications précédentes, dans laquelle le circuit de gaz de traitement (10) comprend une unité de déplacement (30), comprenant une ou plusieurs souffleries, afin de déplacer le gaz de traitement le long du circuit de gaz de traitement (10).
